# EUROPEAN PATENT APPLICATION

(11) **EP 4 280 716 A1**
(43) Date of publication of application: **22.11.2023**
(21) Application number: 22738924.4
(22) Date of filing: 06.01.2022
(51) Int. Cl.: H04W 64/00

(54) **POSITIONING METHOD AND APPARATUS**

(30) Priority: 18.01.2021 CN 202110065357
(71) Applicant: Datang Mobile Communications Equipment Co., Ltd., Beijing 100085 (CN)
(72) Inventor: QUAN, Haiyang, Beijing 100085 (CN); WANG, Da, Beijing 100085 (CN); LI, Jianxiang, Beijing 100085 (CN); FU, Jing, Beijing 100085 (CN); ZHAO, Yali, Beijing 100085 (CN)
(74) Representative: Studio Torta S.p.A.
(86) International application number: PCT/CN2022/070544
(87) International publication number: WO 2022/152043

(57) **Abstract**

Embodiments of the present disclosure provide a positioning method and device. The positioning method applied to the first terminal includes: obtaining terminal information of a second terminal with a location service function; and interacting with the second terminal through a direct communication link to obtain location information of the first terminal. In this way, in the embodiments of the present disclosure, even if the first terminal is not in a network coverage area, the second terminal with the location service function may assist the first terminal in positioning.

## Description

### CROSS-REFERENCE TO RELATED APPLICATION

This application claims the priority of Chinese Application No. 202110065357.8, entitled "positioning method and device", filed on January 18, 2021, the disclosure of which is incorporated in its entirety by reference herein.

### TECHNICAL FIELD

The present disclosure relates to the field of mobile communication technologies, and in particular to a positioning method and a positioning device.

### BACKGROUND

According to the 5G NR positioning technology, at present, self-positioning of a terminal has to be completed when the terminal is in an area covered by the network. However, when the terminal is in an area not covered by the network, or when the terminal leaves a network coverage area, since the terminal cannot communicate with a location server on the network side, the related positioning function cannot be completed.

It can be seen that, in the related art, when a to-be-positioned terminal is in an area not covered by the network, or leaves a network coverage area, the 5G NR positioning technology cannot be used for positioning.

### SUMMARY

Embodiments of the present disclosure provide a positioning method and a positioning device, which can solve the problems in the related art that when a to-be-positioned terminal is in an area not covered by the network, or leaves a network coverage area, the 5G NR positioning technology cannot be used for positioning.

In a first aspect, one embodiment of the present disclosure provides a positioning method, performed by a first terminal, including:
obtaining terminal information of a second terminal with a location service function; and
interacting with the second terminal through a direct communication link to obtain location information of the first terminal.

Optionally, the obtaining terminal information of a second terminal with a location service function, includes:
obtaining the terminal information of the second terminal with the location service function through the direct communication link.

Optionally, the obtaining the terminal information of the second terminal with the location service function through the direct communication link, includes:
receiving, through a direct communication link, first indication information periodically transmitted by at least one third terminal and terminal information of the at least one third terminal; wherein the first indication information is used to indicate whether the at least one third terminal has a location service function;
according to the first indication information and the terminal information of the at least one third terminal, selecting at least one terminal from the at least one third terminal, taking a selected terminal as the second terminal, and taking selected terminal information as the terminal information of the second terminal.

Optionally, the obtaining the terminal information of the second terminal with the location service function through the direct communication link, includes:
transmitting, through a direct communication link, a request message for indicating need to obtain a location service, to at least one third terminal;
receiving, through a direct communication link, second indication information transmitted by a candidate terminal and terminal information of the candidate terminal; wherein the candidate terminal is at least one of the at least one third terminal, and the second indication information is used to indicate that the candidate terminal has a location service function;
according to the second indication information and the terminal information of the candidate terminal, selecting at least one terminal from the at least one candidate terminal, taking a selected terminal as the second terminal, and taking selected terminal information as the terminal information of the second terminal.

Optionally, before receiving, through a direct communication link, second indication information transmitted by a candidate terminal and terminal information of the candidate terminal, the method further includes:
transmitting target information to the third terminal, wherein the target information includes at least one of identification information of the first terminal, identification information of a required location server, positioning methods supported by the first terminal, or speed information of the first terminal;
the receiving, through a direct communication link, second indication information transmitted by a candidate terminal and terminal information of the candidate terminal, includes:
receiving, through the direct communication link, the second indication information and the terminal information of the candidate terminal, transmitted by the candidate terminal according to the target information.

Optionally, the obtaining terminal information of a second terminal with a location service function, includes:
interacting with a base station connected to the first terminal to obtain the terminal information of the second terminal with the location service function.

Optionally, the interacting with a base station connected to the first terminal to obtain the terminal information of the second terminal with the location service function, includes:
receiving terminal information of at least one fourth terminal with a positioning service function periodically transmitted by the base station;
selecting at least one terminal from the at least one fourth terminal according to the terminal information of the fourth terminal, taking a selected terminal as the second terminal, and taking selected terminal information as the terminal information of the second terminal.

Optionally, the selecting at least one terminal from the at least one fourth terminal according to the terminal information of the fourth terminal, taking a selected terminal as the second terminal, and taking selected terminal information as the terminal information of the second terminal, includes:
when the first terminal leaves a network coverage area, selecting at least one terminal from the at least one fourth terminal according to the terminal information of the at least one fourth terminal transmitted by the base station last time, taking a selected terminal as the second terminal, and taking selected terminal information as the terminal information of the second terminal.

Optionally, the interacting with a base station connected to the first terminal to obtain the terminal information of the second terminal with the location service function, includes:
transmitting, to the base station, a request message for indicating need to obtain a location service;
receiving terminal information of at least one fourth terminal with a location service function transmitted by the base station;
selecting at least one terminal from the at least one fourth terminal according to the terminal information of the at least one fourth terminal, taking a selected terminal as the second terminal, and taking selected terminal information as terminal information of the second terminal.

Optionally, before receiving terminal information of at least one fourth terminal with a location service function transmitted by the base station, the method further includes:
transmitting target information to the base station, wherein the target information includes at least one of identification information of the first terminal, identification information of a required location server, positioning methods supported by the first terminal, or speed information of the first terminal;
the receiving terminal information of at least one fourth terminal with a location service function transmitted by the base station, includes:
receiving the terminal information of the at least one fourth terminal with the location service function transmitted by the base station according to the target information.

Optionally, the terminal information includes at least one of terminal identification information, location server identification information, supported positioning methods or speed information.

In a second aspect, one embodiment of the present disclosure provides a positioning method performed by a third terminal, including:
interacting with a first terminal to provide the first terminal with indication information for indicating whether the third terminal has a location service function, thereby enabling the first terminal to select at least one terminal with a location service function from the third terminal as a second terminal.

Optionally, the interacting with a first terminal to provide the first terminal with indication information for indicating whether the third terminal has a location service function, includes:
periodically transmitting, to the first terminal, first indication information and terminal information of the third terminal, through a direct communication link, wherein the first indication information is used to indicate whether the third terminal has a location service function.

Optionally, the interacting with a first terminal to provide the first terminal with indication information for indicating whether the third terminal has a location service function, includes:
receiving, through a direct communication link, a request message transmitted by the first terminal, wherein the request message is used to indicate that the first terminal needs to obtain a location service;
in case that the third terminal has a location service function, transmitting, to the first terminal, second indication information and terminal information of the third terminal, through the direct communication link; wherein the second indication information is used to indicate that the third terminal has a location service function.

Optionally, before transmitting, to the first terminal, second indication information and terminal information of the third terminal, through the direct communication link, the method further includes:
receiving target information transmitted by the first terminal, wherein the target information includes at least one of identification information of the first terminal, identification information of a required location server, positioning methods supported by the first terminal, or speed information of the first terminal;
the transmitting, to the first terminal, second indication information and terminal information of the third terminal, through the direct communication link, includes:
according to the target information, transmitting, to the first terminal, the second indication information and the terminal information of the third terminal, through the direct communication link.

Optionally, the terminal information includes at least one of terminal identification information, location server identification information, supported positioning methods or speed information.

In a third aspect, one embodiment of the present disclosure provides a positioning method performed by a base station, including:
interacting with a first terminal to indicate, to the first terminal, terminal information of at least one fourth terminal with a location service function, thereby enabling the first terminal to select at least one terminal from the fourth terminal as a second terminal.

Optionally, the interacting with a first terminal to indicate, to the first terminal, terminal information of at least one fourth terminal with a location service function, includes:
periodically transmitting, to the first terminal, the terminal information of at least one fourth terminal with the location service function.

Optionally, the interacting with a first terminal to indicate, to the first terminal, terminal information of at least one fourth terminal with a location service function, includes:
receiving a request message for indicating need to obtain a location service, transmitted by the first terminal;
transmitting, to the first terminal, the terminal information of at least one fourth terminal with the location service function.

Optionally, before transmitting, to the first terminal, the terminal information of at least one fourth terminal with the location service function, the method further includes:
receiving target information transmitted by the first terminal, wherein the target information includes at least one of identification information of the first terminal, identification information of a required location server, positioning methods supported by the first terminal, or speed information of the first terminal;
the transmitting, to the first terminal, the terminal information of at least one fourth terminal with the location service function, includes:
according to the target information, transmitting, to the first terminal, the terminal information of at least one fourth terminal with the location service function.

Optionally, the terminal information includes at least one of terminal identification information, location server identification information, supported positioning methods or speed information.

In a fourth aspect, one embodiment of the present disclosure provides a positioning device applied to a first terminal, including: a first memory, a first transceiver and a first processor;
wherein the first memory is configured to store a computer program;
the first transceiver is configured to transmit and receive data under the control of the first processor;
the first processor is configured to read the computer program in the first memory and perform the following operations:
obtaining terminal information of a second terminal with a location service function;
interacting with the second terminal through a direct communication link to obtain location information of the first terminal.

Optionally, when the first processor obtains the terminal information of the second terminal with the location service function, the first processor is configured to,
obtain the terminal information of the second terminal with the location service function through the direct communication link.

Optionally, when the first processor obtains the terminal information of the second terminal with the location service function through the direct communication link, the first processor is configured to,
control the first transceiver to receive, through a direct communication link, first indication information periodically transmitted by at least one third terminal and terminal information of the at least one third terminal; wherein the first indication information is used to indicate whether the at least one third terminal has a location service function;
according to the first indication information and the terminal information of the at least one third terminal, select at least one terminal from the at least one third terminal, take a selected terminal as the second terminal, and take selected terminal information as the terminal information of the second terminal.

Optionally, when the first processor obtains the terminal information of the second terminal with the location service function through the direct communication link, the first processor is configured to,
control the first transceiver to transmit, through a direct communication link, a request message for indicating need to obtain a location service, to at least one third terminal;
control the first transceiver to receive, through a direct communication link, second indication information transmitted by at least one candidate terminal and terminal information of the at least one candidate terminal; wherein the at least one candidate terminal is at least one of the at least one third terminal, and the second indication information is used to indicate that the at least one candidate terminal has a location service function;
according to the second indication information and the terminal information of the candidate terminal, select at least one terminal from the at least one candidate terminal, take a selected terminal as the second terminal, and take selected terminal information as the terminal information of the second terminal.

Optionally, when the first processor obtains the terminal information of the second terminal with the location service function, the first processor is specifically configured to,
control the first transceiver to interact with a base station connected to the first terminal to obtain the terminal information of the second terminal with the location service function.

Optionally, when the first transceiver interacts with the base station connected to the first terminal to obtain the terminal information of the second terminal with the location service function, the first transceiver is specifically configured to receive terminal information of at least one fourth terminal with a positioning service function periodically transmitted by the base station;
the first processor is further configured to, according to the terminal information of the fourth terminal, select at least one terminal from the at least one fourth terminal, take a selected terminal as the second terminal, and take selected terminal information as the terminal information of the second terminal.

Optionally, when the first processor selects at least one terminal from the at least one fourth terminal according to the terminal information of the fourth terminal, takes the selected terminal as the second terminal, and takes the selected terminal information as the terminal information of the second terminal, the first processor is specifically configured to,
when the first terminal leaves a network coverage area, select at least one terminal from the at least one fourth terminal according to the terminal information of the at least one fourth terminal transmitted by the base station last time, take a selected terminal as the second terminal, and take selected terminal information as the terminal information of the second terminal.

Optionally, when the first transceiver interacts with the base station connected to the first terminal to obtain terminal information of the second terminal with a location service function, the first transceiver is specifically configured to,
transmit, to the base station, a request message for indicating need to obtain a location service;
receive terminal information of at least one fourth terminal with a location service function transmitted by the base station;
the first processor is further configured to select at least one terminal from the at least one fourth terminal according to the terminal information of the at least one fourth terminal, take a selected terminal as the second terminal, and take selected terminal information as terminal information of the second terminal.

In a fifth aspect, one embodiment of the present disclosure provides a positioning device applied to a third terminal, including: a second memory, a second transceiver and a second processor;
wherein the second memory is configured to store a computer program;
the second transceiver is configured to transmit and receive data under the control of the second processor;
the second processor is configured to read the computer program in the second memory and perform the following operations:
controlling the second transceiver to interact with a first terminal to provide the first terminal with indication information for indicating whether the third terminal has a location service function, thereby enabling the first terminal to select at least one terminal with a location service function from the third terminal as a second terminal.

Optionally, when the second transceiver interacts with the first terminal to provide the first terminal with the indication information for indicating whether the third terminal has the location service function, the second transceiver is specifically configured to,
periodically transmit, to the first terminal, first indication information and terminal information of the third terminal, through a direct communication link, wherein the first indication information is used to indicate whether the third terminal has a location service function.

Optionally, when the second transceiver interacts with the first terminal to provide the first terminal with the indication information for indicating whether the third terminal has the location service function, the second transceiver is specifically configured to,
receive, through a direct communication link, a request message transmitted by the first terminal, wherein the request message is used to indicate that the first terminal needs to obtain a location service;
in case that the third terminal has a location service function, transmit, to the first terminal, second indication information and terminal information of the third terminal, through the direct communication link; wherein the second indication information is used to indicate that the third terminal has a location service function.

In a sixth aspect, one embodiment of the present disclosure provides a positioning device applied to a base station, including: a third memory, a third transceiver and a third processor;
wherein the third memory is configured to store a computer program;
the third transceiver is configured to transmit and receive data under the control of the third processor;
the third processor is configured to read the computer program in the third memory and perform the following operations:
   controlling the third transceiver to interact with a first terminal to indicate, to the first terminal, terminal information of at least one fourth terminal with a location service function, thereby enabling the first terminal to select at least one terminal from the fourth terminal as a second terminal.

Optionally, when the third transceiver interacts with the first terminal to indicate, to the first terminal, terminal information of at least one fourth terminal with the location service function, the third transceiver is specifically configured to periodically transmit, to the first terminal, the terminal information of at least one fourth terminal with the location service function.

Optionally, when the third transceiver interacts with the first terminal to indicate, to the first terminal, terminal information of at least one fourth terminal with the location service function, the third transceiver is specifically configured to,
receive a request message for indicating need to obtain a location service, transmitted by the first terminal;
transmit, to the first terminal, the terminal information of at least one fourth terminal with the location service function.

In a seventh aspect, one embodiment of the present disclosure provides a positioning device applied to a first terminal, including:
a first information obtaining module configured to obtain terminal information of a second terminal with a location service function;
a location module configured to interact with the second terminal through a direct communication link to obtain location information of the first terminal.

In an eighth aspect, one embodiment of the present disclosure provides a positioning device applied to a third terminal, including:
a first interaction module configured to interact with a first terminal to provide the first terminal with indication information for indicating whether the third terminal has a location service function, thereby enabling the first terminal to select at least one terminal with a location service function from the third terminal as a second terminal.

In a ninth aspect, one embodiment of the present disclosure provides a positioning device applied to a base station, including:
a second interaction module configured to interact with a first terminal to indicate, to the first terminal, terminal information of at least one fourth terminal with a location service function, thereby enabling the first terminal to select at least one terminal from the fourth terminal as a second terminal.

In a tenth aspect, one embodiment of the present disclosure provides a processor-readable storage medium, including a computer program stored thereon; wherein the computer program is used to enable a processor to execute the above positioning method.

In an eleventh aspect, one embodiment of the present disclosure provides a computer program, including computer readable codes; wherein the computer readable codes, when running on a computing processing device, cause the computing processing device to execute the above positioning method.

In a twelfth aspect, one embodiment of the present disclosure provides a computer-readable medium, including the computer program described in the eleventh aspect stored thereon.

In the embodiments of the present disclosure, the first terminal can obtain the terminal information of the second terminal with the location service function, and then interacts with the second terminal through the direct communication link to locate the first terminal and obtain the location information of the first terminal. It can be seen that, in the embodiments of the present disclosure, the second terminal with the location service function can assist the first terminal in positioning through the direct communication link between the terminals. Therefore, even if the first terminal is not in the network coverage area, the second terminal with the location service function can assist the first terminal in positioning. It can be seen that, in the embodiments of the present disclosure, even if a to-be-located terminal is not in the network coverage area, it can be located.

The above description is only an overview of the technical solution of the present disclosure. In order to better understand the technical solution of the present disclosure, it can be implemented according to contents of the description, and in order to make the above and other purposes, features and advantages of the present disclosure easily understood, the specific embodiments of the present disclosure are listed hereinafter.

### BRIEF DESCRIPTION OF THE DRAWINGS

In order to illustrate technical solutions according to embodiments of the present disclosure more clearly, drawings to be used in the description of the embodiments will be described briefly hereinafter. Apparently, the drawings described hereinafter are only some embodiments of the present disclosure, and other drawings may be obtained by those skilled in the art according to those drawings without creative work.
FIG. 1 is a schematic diagram of a 5G positioning architecture in the related art;
FIG. 2 is a schematic flow diagram showing that a server requests for triggering LPP location capability transfer in the related art;
FIG. 3 is a schematic flow diagram showing that a target device actively reports LPP location capability in the related art;
FIG. 4 is a schematic diagram of a direct communication link;
FIG. 5 is a flowchart of a positioning method applied to a first terminal according to an embodiment of the present disclosure;
FIG. 6 is a flowchart of a positioning method applied to a third terminal according to an embodiment of the present disclosure;
FIG. 7 is a flowchart of a positioning method applied to a base station according to an embodiment of the present disclosure;
FIG. 8 is a first block diagram of a positioning device applied to a first terminal according to an embodiment of the present disclosure;
FIG. 9 is a first block diagram of a positioning device applied to a third terminal according to an embodiment of the present disclosure;
FIG. 10 is a first block diagram of a positioning device applied to a base station according to an embodiment of the present disclosure;
FIG. 11 is a second block diagram of a positioning device applied to a first terminal according to an embodiment of the present disclosure;
FIG. 12 is a second block diagram of a positioning device applied to a third terminal according to an embodiment of the present disclosure;
FIG. 13 is a second block diagram of a positioning device applied to a base station according to an embodiment of the present disclosure;
FIG. 14 is a schematic block diagram of a computing processing device for performing a method according to the present disclosure; and
FIG. 15 schematically shows a storage unit for holding or carrying program codes for realizing a method according to the present disclosure.

### DETAILED DESCRIPTION

In order to make objects, technical solutions and advantages of embodiments of the present disclosure more apparent, the technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or".

The term "plurality" in the embodiments of the present disclosure means two or more, and other quantifiers are similar.

The following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

Embodiments of the present disclosure provide an integrated access backhaul node (IAB) switching method and device, which can realize switching of the IAB node between CUs.

The method and the device are based on the same concept. Since principles of the method and the device for solving the problems are similar, implementation of the device and the method can be referred to each other, and duplication is not repeated.

In addition, the technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

The terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or car mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

In order to facilitate understanding of the positioning method provided in the present disclosure, the existing positioning technology is firstly introduced as follows.

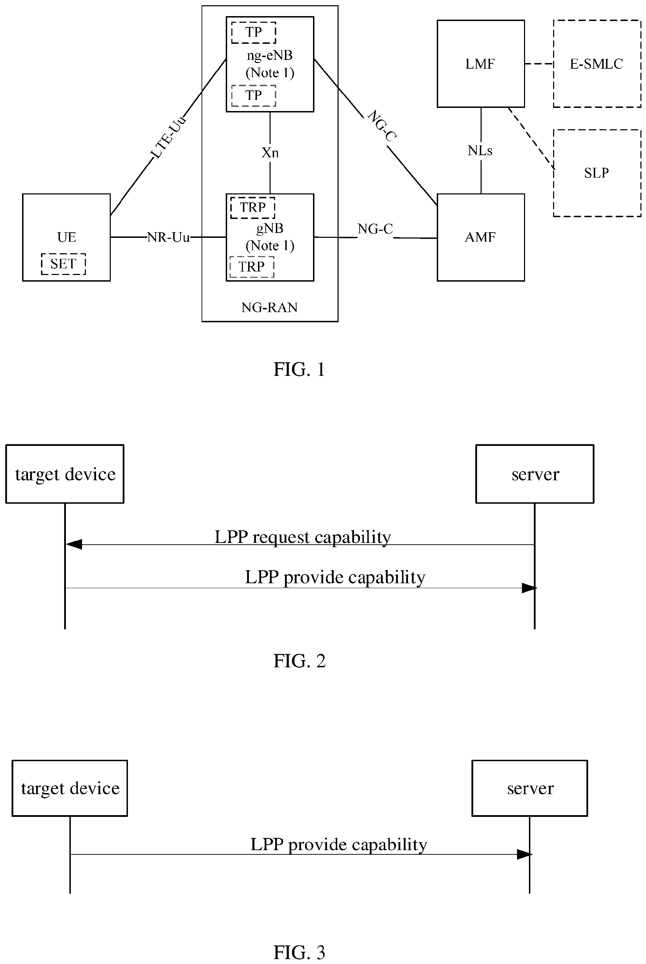

In a first aspect, a positioning architecture (i.e., a 5G positioning architecture) applicable to a next generation radio access network (NG-RAN) is shown in FIG. 1. In this architecture, a location management function (LMF) is responsible for selecting a positioning method and triggering a corresponding positioning measurement, and can calculate a final result and accuracy of positioning The NG-RAN node can transmit a positioning reference signal, or perform positioning measurement based on auxiliary information. A UE can transmit a positioning reference signal, or perform positioning measurement based on auxiliary information, and the UE can also calculate a final result and accuracy of positioning based on a measurement result.

In FIG. 1, SET is a user equipment (UE), LTE-Uu is a long-term evolution Uu interface, NR-Uu is a 5G Uu interface, TP is a transmission point, ng-eNB is an upgraded 4G base station, Note is a node, TRP is a transmission-receiving point, gNB is a 5G base station, NG-C is a NG interface control plane, NLs is an AMF-LMF interface, AMF is an authentication management function network element, LMF is a location management function entity (a location server in 5G system), E-SMLC is an evolved serving mobile location center, and SLP is a service location protocol.

In a second aspect, positioning capability in LTE positioning protocol (LPP) includes positioning methods supported by a target device, different supported aspects of a certain positioning method (such as a supported types of auxiliary data of an assisted global navigation satellite system (A-GNSS)), and some common characteristics of positioning that are not limited to a certain positioning method (such as the capability to handle multiple LPP events).

The LPP positioning capability transfer event may be triggered by a request from a server, or "actively reported" by the target device.

Specifically, a process that a server requests for triggering LPP location capability transfer may be shown in FIG. 2. That is, the server transmits an LPP request capability message to a target device to request for relevant positioning capability of the target device; the target device transmits the relevant positioning capability to the server, where the relevant positioning capability may include a specific positioning method and common characteristics of some positioning methods.

In addition, a process that a target device actively reports LPP location capability may be shown in FIG. 3.

In addition, the above server may be an LMP in the 5G positioning architecture.

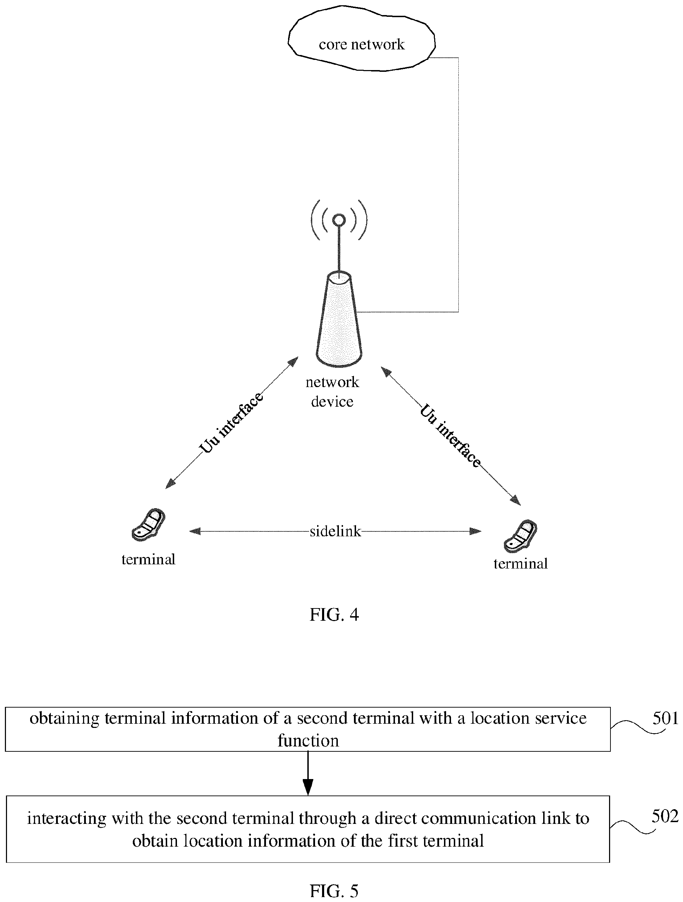

Referring to FIG. 5, one embodiment of the present disclosure provides a positioning method. The method is applied to a first terminal, and may include the following steps 501 to 502.

Step 501: obtaining terminal information of a second terminal with a location service function.

In the embodiment of the present disclosure, one terminal with a location service function can configure a positioning resource, coordinate and transmit a positioning signal, support related signaling used by a location server, measure the positioning signal, process a measurement result, and calculate a terminal position, etc. That is, the terminal with the location service function has relevant positioning function of the location server. Therefore, in the embodiments of the present disclosure, after the first terminal obtains the terminal information of the second terminal with the location service function, the first terminal can position the first terminal with assistance of the second terminal.

Step 502: interacting with the second terminal through a direct communication link to obtain location information of the first terminal.

As shown in FIG. 4, direct communication refers to a manner in which adjacent terminals can perform data transmission through a direct communication links (also referred as sidelink) within a short distance. A radio interface corresponding to the sidelink link is referred as a direct communication interface, also referred as a sidelink interface. Therefore, even if the first terminal is not in a network coverage area, the first terminal can communicate with the second terminal through the direct communication link. The second terminal has a location service function. Therefore, even if the first terminal is not in the network coverage area, the second terminal having the location service function can assist the first terminal in positioning.

Optionally, the step 501 of obtaining terminal information of a second terminal with a location service function, includes:
obtaining the terminal information of the second terminal with the location service function through the direct communication link.

That is, the first terminal can obtain the terminal information of the second terminal having the location service function through the direct communication link.

Optionally, the obtaining the terminal information of the second terminal with the location service function through the direct communication link, includes:
receiving, through a direct communication link, first indication information periodically transmitted by at least one third terminal and terminal information of the third terminal; where the first indication information is used to indicate whether the third terminal has a location service function;
according to the first indication information and the terminal information of the third terminal, selecting at least one terminal from the at least one third terminal, taking a selected terminal as the second terminal, and taking selected terminal information as the terminal information of the second terminal.

It can be seen that the third terminal can periodically transmit the first indication information and the terminal information of the third terminal to the first terminal. Optionally, the third terminal may carry the first indication information and the terminal information of the third terminal in a broadcast message or a discovery message or a dedicated message (that is, a newly defined message) and transmit it to the first terminal; or, the third terminal may also transmit the first indication information and the terminal information of the third terminal to the first terminal in a multicast manner or an on-demand manner. The discovery message is a type of message transmitted on a direct communication interface, and is used to discover a communication peer.

The first indication information may be 1 bit. In case that the first indication information is "1", it means that the third terminal has the location service function, or the location service function is enabled. In case that the first indication information is "0", it means that the third terminal does not have the location service function, or the location service function is not enabled. It is to be noted that the first indication information here is only an example, and the present disclosure is not limited to the first indication information specifically described here, that is, the first indication information here does not constitute a limitation on the embodiment.

Optionally, the obtaining the terminal information of the second terminal with the location service function through the direct communication link, includes:
transmitting, through a direct communication link, a request message for indicating need to obtain a location service, to at least one third terminal;
receiving, through a direct communication link, second indication information transmitted by a candidate terminal and terminal information of the candidate terminal; where the candidate terminal is at least one of the at least one third terminal, and the second indication information is used to indicate that the candidate terminal has a location service function;
according to the second indication information and the terminal information of the candidate terminal, selecting at least one terminal from the at least one candidate terminal, taking a selected terminal as the second terminal, and taking selected terminal information as the terminal information of the second terminal.

It can be seen that the first terminal may transmit, to at least one third terminal, a request message for indicating need to obtain the location service, so that a terminal with the location service function among these third terminals feeds back the second indication information that it has the location service function to the first terminal. Then, the first terminal can select a second terminal that can assist the first terminal in positioning, from the third terminals that feed back the second indication information.

The first terminal may carry the request message in a broadcast message or a discovery message or a dedicated message (that is, a newly defined message) and transmit it to the third terminal; or, the first terminal may also transmit the request message to the third terminal in a multicast manner or an on-demand manner. The request message may be 1 bit. For example, in case that the request message is "1", it means that the first terminal needs to obtain the location service. It is to be noted that the request message here is only an example, and the present disclosure is not limited to the request message specifically described here, that is, the request message here does not constitute a limitation on the embodiment.

In addition, the second indication information may be 1 bit. In case that the second indication information is "1", it means that the third terminal has the location service function, or the location service function is enabled. It is to be noted that the second indication information here is only an example, and the present disclosure is not limited to the second indication information specifically described here, that is, the second indication information here does not constitute a limitation on the embodiment.

Optionally, before receiving, through a direct communication link, second indication information transmitted by a candidate terminal and terminal information of the candidate terminal, the method further includes:
transmitting target information to the third terminal, where the target information includes at least one of identification information of the first terminal, identification information of a required location server, positioning methods supported by the first terminal, or speed information of the first terminal;
the receiving, through a direct communication link, second indication information transmitted by a candidate terminal and terminal information of the candidate terminal, includes:
receiving, through the direct communication link, the second indication information and the terminal information of the candidate terminal, transmitted by the candidate terminal according to the target information.

Specifically, the first terminal may transmit, to the third terminal, the request message together with at least one of identification information of the first terminal, identification information of a required location server, positioning methods supported by the first terminal, or speed information of the first terminal. For example, the first terminal may carry theses information in a broadcast message or a discovery message or a dedicated message and transmit it to the third terminal, or the first terminal may transmit theses information to the third terminal in a multicast or on-demand manner.

The speed information of the first terminal may be speed information obtained periodically by the first terminal. The speed information may include speed size and speed direction.

In addition, after the first terminal transmits the above target information to the third terminal, the candidate terminal in the third terminals (that is, at least one terminal with the location service function in the third terminals) determines, according to the target information, whether to feed back the second indication information and its terminal information, to the first terminal.

For example, in case that the target information includes the identification information of the location server required by the first terminal, the candidate terminal needs to feed back the second indication information and its terminal information to the first terminal when an identifier of a location server of the candidate terminal is the same as an identifier of the location server required by the first terminal.

In case that the target information includes the positioning methods supported by the first terminal, the candidate terminal needs to feed back the second indication information and its terminal information to the first terminal when positioning methods supported by candidate terminal overlaps with the positioning methods supported by the first terminal.

In case that the target information includes the speed information of the first terminal, the candidate terminal needs to feed back the second indication information and its terminal information to the first terminal when an angle between a speed direction of the candidate terminal and the speed direction of the first terminal is smaller than a preset angle and a relative speed between the candidate terminal and the first terminal is smaller than a preset value.

Optionally, the step 501 of obtaining terminal information of a second terminal with a location service function, includes:
interacting with a base station connected to the first terminal to obtain the terminal information of the second terminal with the location service function.

That is, the first terminal may obtain in advance, through the base station connected to the first terminal (i.e., the base station which serves the first terminal), the terminal information of the second terminal with the location service function.

Conditions for the first terminal to obtain in advance the terminal information of the second terminal with the location service function through the base station connected to the first terminal, may include: service type or characteristics of the first terminal meet a first preset condition; or, conditions of cells searched by the first terminal meet a second preset condition, for example, the number of surrounding cells of the first terminal is small and signal is weak; or, the number of base stations that are able to assist the first terminal in positioning is insufficient (for example, the first terminal can only be connected to one base station at present, but the positioning method adopted requires three base stations, then two second terminals with the location service function can be obtained to assist the first terminal in positioning), causing the terminal to be unable to perform positioning.

Optionally, the interacting with a base station connected to the first terminal to obtain the terminal information of the second terminal with the location service function, includes:
receiving terminal information of at least one fourth terminal with a positioning service function periodically transmitted by the base station;
according to the terminal information of the fourth terminal, selecting at least one terminal from the at least one fourth terminal, taking a selected terminal as the second terminal, and taking selected terminal information as the terminal information of the second terminal.

That is, the base station may periodically indicate to the first terminal the terminal information of at least one fourth terminal with the location service function, so that the first terminal may select a second terminal that can assist the first terminal in positioning from the at least one fourth terminal.

The base station may carry the terminal information of the fourth terminal in a radio resource control (RRC) message, and transmit it to the first terminal through a Uu interface.

Optionally, according to the terminal information of the fourth terminal, selecting at least one terminal from the at least one fourth terminal, taking a selected terminal as the second terminal, and taking selected terminal information as the terminal information of the second terminal, includes:
when the first terminal leaves a network coverage area, selecting at least one terminal from the at least one fourth terminal according to the terminal information of the at least one fourth terminal transmitted by the base station last time, taking a selected terminal as the second terminal, and taking selected terminal information as the terminal information of the second terminal.

That is, after the first terminal receives the terminal information of the fourth terminal periodically transmitted by the base station, the first terminal can save the latest terminal information of the fourth terminal, so that when the first terminal goes off-line (that is, when the first terminal leaves the current network coverage area), the first terminal can select the second terminal that can assist the first terminal in positioning, from the latest saved fourth terminals.

It can be seen that in the embodiments of the present disclosure, the first terminal can obtain the terminal information of the fourth terminals with the location service function through the base station when the first terminal is online. After the first terminal is disconnected from the network, the first terminal can continue to use the terminal information of the fourth terminals with the location service function obtained from the base station before the disconnection.

Optionally, the interacting with the base station connected to the first terminal to obtain terminal information of the second terminal with a location service function, includes:
transmitting, to the base station, a request message for indicating need to obtain a location service;
receiving terminal information of at least one fourth terminal with a location service function transmitted by the base station;
selecting at least one terminal from the at least one fourth terminal according to the terminal information of the at least one fourth terminal, taking a selected terminal as the second terminal, and taking selected terminal information as terminal information of the second terminal.

It can be seen that the first terminal may transmit, to the base station, a request message for indicating need to obtain the location service, so that the base station may indicate, to first terminal, the terminal information of at least one fourth terminal with the location service function. Then, the first terminal can select the second terminal that can assist the first terminal in positioning from these fourth terminals.

The first terminal may carry the request message in an RRC message and transmit it to the base station. The request message may be 1 bit. For example, when the request message is "1", it means that the first terminal needs to obtain the location service. It is to be noted that the request message here is only an example, and the present disclosure is not limited to the request message specifically described here, that is, the request message here does not constitute a limitation on the embodiment.

Optionally, before receiving terminal information of at least one fourth terminal with a location service function transmitted by the base station, the method further includes:
transmitting target information to the base station, where the target information includes at least one of identification information of the first terminal, identification information of a required location server, positioning methods supported by the first terminal, or speed information of the first terminal;
the receiving terminal information of at least one fourth terminal with a location service function transmitted by the base station, includes:
receiving the terminal information of the at least one fourth terminal with the location service function transmitted by the base station according to the target information.

Specifically, the first terminal may transmit, to the base station, the request message together with at least one of identification information of the first terminal, identification information of a required location server, positioning methods supported by the first terminal, or speed information of the first terminal. For example, the first terminal may carry the information in an RRC message and transmit it to the base station.

After the first terminal transmits the target information to the base station, according to the target information, the base station indicates, to the first terminal, the terminal information of at least one fourth terminal with the location service function.

For example, in case that the target information includes the identification information of the location server required by the first terminal, the fourth terminal indicated by the base station to the first terminal needs to meet the following condition: an identifier of a location server of the fourth terminal is the same as an identifier of the location server required by the first terminal.

In case that the target information includes the positioning methods supported by the first terminal, the fourth terminal indicated by the base station to the first terminal needs to meet the following condition: positioning methods supported by the fourth terminal overlaps with the positioning methods supported by the first terminal.

In case that the target information includes the speed information of the first terminal, the fourth terminal indicated by the base station to the first terminal needs to meet the following condition: an angle between a speed direction of the fourth terminal and the speed direction of the first terminal is smaller than a preset angle and a relative speed between the fourth terminal and the first terminal is smaller than a preset value.

Optionally, the above terminal information may include one or more of terminal identification information, a location server identifier, supported positioning methods, and speed information. The terminal identification information may include at least one of a terminal ID and a layer-2 ID in the sidelink interface.

It is to be noted that a location server identifier can also be set for a terminal with a location service function, that is, the location server identifier can also be used to identify the terminal with the location server function. The above speed information is speed information obtained by periodic detection of the terminal, and the speed information may include speed size and speed direction. The layer-2 ID in the sidelink interface is also used to identify the terminal.

In addition, after the first terminal obtains at least one terminal with the location service function, according to the terminal information of these terminals and the terminal information of the first terminal, the first terminal can select a second terminal that can assist the first terminal in positioning, from these terminals with the location service function.

Optionally, the above step 502 of interacting with the second terminal through a direct communication link to obtain the location information of the first terminal, includes:
exchanging positioning capabilities with the second terminal through a direct communication link, and determining a positioning method supported by both the first terminal and the second terminal;
according to the positioning method, interacting with the second terminal to configure a positioning signal and a positioning resource;
transmitting a positioning measurement result to the second terminal, thereby enabling the second terminal to calculate location information of the first terminal according to the positioning measurement result;
receiving the location information of the first terminal transmitted by the second terminal.

It can be seen that, in the embodiment of the present disclosure, after the first terminal determines the second terminal that can assist the first terminal in positioning, the first terminal and the second terminal can transmit LPP signaling therebetween through the sidelink interface to exchange positioning capability and negotiate configuration of a positioning signal and a positioning resource, and the first terminal provides positioning-related measurement results and other information to the second terminal for performing position calculation. After completing the position calculation, the second terminal feeds back a location of the first terminal to the first terminal to complete a positioning session.

That is, the first terminal and the second terminal interact with the positioning methods supported by each of the first terminal and the second terminal, so as to select a positioning method supported by both the first terminal and the second terminal. After the positioning method is determined, which one of the first terminal and the second terminal transmits a positioning signal and which terminal performs the positioning measurement can be determined, and the specific positioning resource configuration can also be determined, thereby realizing the positioning of the first terminal.

Optionally, the first terminal and the second terminal may exchange the above information through control signaling of a sidelink interface (SL SRB) or user plane data message of a sidelink interface (SL DRB). For example, control signaling (SL SRB) is used to interact with LPP signaling to exchange positioning capabilities, negotiate configuration of a positioning signal and a positioning resource, and user plane data message (SL DRB) is used to exchange a positioning-related measurement result, location information, etc.

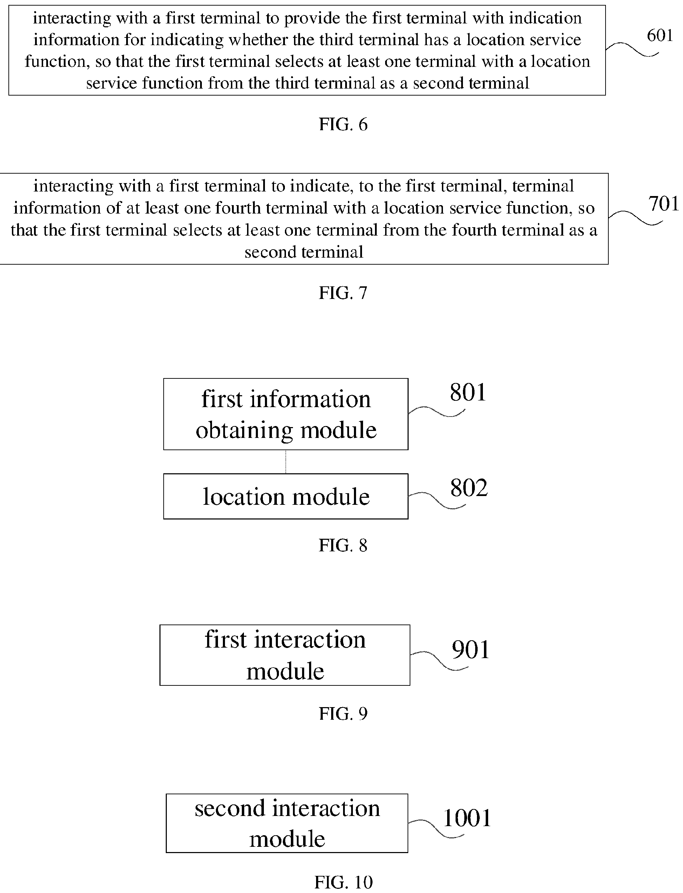

Referring to FIG. 6, one embodiment of the present disclosure provides a positioning method. The method is applied to a third terminal, and may include the following step 601.

Step 601: interacting with a first terminal to provide the first terminal with indication information for indicating whether the third terminal has a location service function, so that the first terminal selects at least one terminal with a location service function from the third terminal as a second terminal.

In the embodiment of the present disclosure, one terminal with a location service function can configure a positioning resource, coordinate and transmit a positioning signal, support related signaling used by a location server, measure the positioning signal, process a measurement result, and calculate a terminal position, etc. That is, the terminal with the location service function has relevant positioning function of the location server. Therefore, in the embodiments of the present disclosure, after the first terminal obtains the terminal information of the second terminal with the location service function, the first terminal can position the first terminal with assistance of the second terminal.

Optionally, the step 601 of interacting with a first terminal to provide the first terminal with indication information for indicating whether the third terminal has a location service function, includes:
periodically transmitting, to the first terminal, first indication information and terminal information of the third terminal, through a direct communication link, where the first indication information is used to indicate whether the third terminal has a location service function.

After the first terminal receives the first indication information and the terminal information of the third terminal transmitted by at least one third terminal, according to the first indication information and the terminal information of the third terminal, the first terminal selects at least one terminal from the at least one third terminal as the second terminal to assist the first terminal in positioning.

It can be seen that the third terminal may periodically transmits the first indication information and the terminal information of the third terminal to the first terminal. Optionally, the third terminal may carry the first indication information and the terminal information of the third terminal in a broadcast message or a discovery message or a dedicated message (that is, a newly defined message) and transmits it to the first terminal; or, the third terminal may transmit the first indication information and the terminal information of the third terminal to the first terminal in a multicast manner or an on-demand manner.

The first indication information may be 1 bit. In case that the first indication information is "1", it means that the third terminal has the location service function, or the location service function is enabled. In case that the first indication information is "0", it means that the third terminal does not have the location service function, or the location service function is not enabled. It is to be noted that the first indication information here is only an example, and the present disclosure is not limited to the first indication information specifically described here, that is, the first indication information here does not constitute a limitation on the embodiment.

Optionally, the step 601 of interacting with a first terminal to provide the first terminal with indication information for indicating whether the third terminal has a location service function, includes:
receiving, through a direct communication link, a request message transmitted by the first terminal, where the request message is used to indicate that the first terminal needs to obtain a location service;
in case that the third terminal has a location service function, transmitting, to the first terminal, second indication information and terminal information of the third terminal, through the direct communication link; where the second indication information is used to indicate that the third terminal has a location service function.

It can be seen that the first terminal may transmit, to at least one third terminal, a request message for indicating need to obtain the location service, so that a terminal with the location service function among these third terminals feeds back the second indication information that it has the location service function to the first terminal. Then, the first terminal can select a second terminal that can assist the first terminal in positioning, from the third terminals that feed back the second indication information.

The first terminal may carry the request message in a broadcast message or a discovery message or a dedicated message (that is, a newly defined message) and transmit it to the third terminal; or, the first terminal may also transmit the request message to the third terminal in a multicast manner or an on-demand manner. The request message may be 1 bit. For example, in case that the request message is "1", it means that the first terminal needs to obtain the location service. It is to be noted that the request message here is only an example, and the present disclosure is not limited to the request message specifically described here, that is, the request message here does not constitute a limitation on the embodiment.

In addition, the second indication information may be 1 bit. In case that the second indication information is "1", it means that the third terminal has the location service function, or the location service function is enabled. It is to be noted that the second indication information here is only an example, and the present disclosure is not limited to the second indication information specifically described here, that is, the second indication information here does not constitute a limitation on the embodiment.

Optionally, before transmitting, to the first terminal, second indication information and terminal information of the third terminal, through the direct communication link, the method further includes:
receiving target information transmitted by the first terminal, where the target information includes at least one of identification information of the first terminal, identification information of a required location server, positioning methods supported by the first terminal, or speed information of the first terminal;
the transmitting, to the first terminal, second indication information and terminal information of the third terminal, through the direct communication link, includes:
according to the target information, transmitting, to the first terminal, the second indication information and the terminal information of the third terminal, through the direct communication link.

It can be seen that the first terminal may transmit, to the third terminal, the request message together with at least one of identification information of the first terminal, identification information of a required location server, positioning methods supported by the first terminal, or speed information of the first terminal. For example, the first terminal may carry theses information in a broadcast message or a discovery message or a dedicated message and transmit it to the third terminal, or the first terminal may transmit theses information to the third terminal in a multicast or on-demand manner.

In addition, after the first terminal transmits the above target information to the third terminal, a candidate terminal in the third terminals (that is, at least one terminal with the location service function in the third terminals) determines, according to the target information, whether to feed back the second indication information and its terminal information, to the first terminal.

For example, in case that the target information includes the identification information of the location server required by the first terminal, the candidate terminal needs to feed back the second indication information and its terminal information to the first terminal when an identifier of a location server of the candidate terminal is the same as an identifier of the location server required by the first terminal.

In case that the target information includes the positioning methods supported by the first terminal, the candidate terminal needs to feed back the second indication information and its terminal information to the first terminal when positioning methods supported by candidate terminal overlaps with the positioning methods supported by the first terminal.

In case that the target information includes the speed information of the first terminal, the candidate terminal needs to feed back the second indication information and its terminal information to the first terminal when an angle between a speed direction of the candidate terminal and the speed direction of the first terminal is smaller than a preset angle and a relative speed between the candidate terminal and the first terminal is smaller than a preset value.

Optionally, the above terminal information may include one or more of terminal identification information, a location server identifier, supported positioning methods, and speed information. The terminal identification information may include at least one of a terminal ID and a layer-2 ID in the sidelink interface.

In addition, it is to be noted that a location server identifier can also be set for a terminal with a location service function, that is, the location server identifier can also be used to identify the terminal with the location server function. The above speed information is speed information obtained by periodic detection of the terminal, and the speed information may include speed size and speed direction. The layer-2 ID in the sidelink interface is also used to identify the terminal.

Referring to FIG. 7, one embodiment of the present disclosure provides a positioning method. The method may include the following step 701.

Step 701: interacting with a first terminal to indicate, to the first terminal, terminal information of at least one fourth terminal with a location service function, so that the first terminal selects at least one terminal from the fourth terminal as a second terminal.

In the embodiment of the present disclosure, one terminal with a location service function can configure a positioning resource, coordinate and transmit a positioning signal, support related signaling used by a location server, measure the positioning signal, process a measurement result, and calculate a terminal position, etc. That is, the terminal with the location service function has relevant positioning function of the location server. Therefore, in the embodiments of the present disclosure, after the first terminal obtains the terminal information of the second terminal with the location service function, the first terminal can position the first terminal with assistance of the second terminal.

Optionally, the step 701 of interacting with a first terminal to indicate, to the first terminal, terminal information of at least one fourth terminal with a location service function, includes:
periodically transmitting, to the first terminal, the terminal information of at least one fourth terminal with the location service function.

That is, a base station may periodically indicate to the first terminal the terminal information of at least one fourth terminal with the location service function, so that the first terminal may select a second terminal that can assist the first terminal in positioning from the at least one fourth terminal.

The base station may carry the terminal information of the fourth terminal in a radio resource control (RRC) message, and transmit it to the first terminal through a Uu interface.

Optionally, the interacting with a first terminal to indicate, to the first terminal, terminal information of at least one fourth terminal with a location service function, includes:
receiving a request message for indicating need to obtain a location service, transmitted by the first terminal;
transmitting, to the first terminal, the terminal information of at least one fourth terminal with the location service function.

It can be seen that the first terminal may transmit, to the base station, a request message for indicating need to obtain the location service, so that the base station may indicate, to first terminal, the terminal information of at least one fourth terminal with the location service function. Then, the first terminal can select the second terminal that can assist the first terminal in positioning from these fourth terminals.

The first terminal may carry the request message in an RRC message and transmit it to the base station. The request message may be 1 bit. For example, when the request message is "1", it means that the first terminal needs to obtain the location service. It is to be noted that the request message here is only an example, and the present disclosure is not limited to the request message specifically described here, that is, the request message here does not constitute a limitation on the embodiment.

Optionally, before transmitting, to the first terminal, the terminal information of at least one fourth terminal with the location service function, the method further includes:
receiving target information transmitted by the first terminal, where the target information includes at least one of identification information of the first terminal, identification information of a required location server, positioning methods supported by the first terminal, or speed information of the first terminal;
the transmitting, to the first terminal, the terminal information of at least one fourth terminal with the location service function, includes:
according to the target information, transmitting, to the first terminal, the terminal information of at least one fourth terminal with the location service function.

It can be seen that the first terminal may transmit, to the base station, the request message together with at least one of identification information of the first terminal, identification information of a required location server, positioning methods supported by the first terminal, or speed information of the first terminal. For example, the first terminal may carry the information in an RRC message and transmit it to the base station.

After the first terminal transmits the target information to the base station, according to the target information, the base station indicates, to the first terminal, the terminal information of at least one fourth terminal with the location service function.

For example, in case that the target information includes the identification information of the location server required by the first terminal, the fourth terminal indicated by the base station to the first terminal needs to meet the following condition: an identifier of a location server of the fourth terminal is the same as an identifier of the location server required by the first terminal.

In case that the target information includes the positioning methods supported by the first terminal, the fourth terminal indicated by the base station to the first terminal needs to meet the following condition: positioning methods supported by the fourth terminal overlaps with the positioning methods supported by the first terminal.

In case that the target information includes the speed information of the first terminal, the fourth terminal indicated by the base station to the first terminal needs to meet the following condition: an angle between a speed direction of the fourth terminal and the speed direction of the first terminal is smaller than a preset angle and a relative speed between the fourth terminal and the first terminal is smaller than a preset value.

Optionally, the above terminal information may include one or more of terminal identification information, a location server identifier, supported positioning methods, and speed information. The terminal identification information may include at least one of a terminal ID and a layer-2 ID in the sidelink interface.

In addition, it is to be noted that a location server identifier can also be set for a terminal with a location service function, that is, the location server identifier can also be used to identify the terminal with the location server function. The above speed information is speed information obtained by periodic detection of the terminal, and the speed information may include speed size and speed direction. The layer-2 ID in the sidelink interface is also used to identify the terminal.

To sum up, specific implementation manners of the positioning method in the embodiment of the present disclosure are described as the following implementation manners 1 to 4.

The first thing to explain is that there is a type of terminal that not only has positioning functions supported by ordinary terminals, but also has some functions of location servers, such as configuring positioning resources, coordinating and transmitting positioning signals, supporting related signaling used by a location server, measuring the positioning signal, processing a measurement result, and calculating a terminal position. Such terminal with some functions of the location server may be referred as a terminal with a location service function. For ease of description, such terminal may be referred to as type-B terminal, and an ordinary terminal that only supports positioning function may be referred to as type-A terminal.

In addition, the type-B terminal may also be a type of terminal contracted by an operator or configured through a network. Further, in order to ensure the effect of positioning, the type-B terminal may be a terminal or network device with a fixed location, or a terminal whose own location can be dynamically obtained, so as to provide relatively accurate positioning services.

### Implementation mode one

A type-B terminal periodically broadcasts on a sidelink interface that it has a location service function. For example, the type-B terminal can transmit a broadcast message or a discovery message through a sidelink. The broadcast message or the discovery message includes indication information for indicating whether to have the location service function. For example, the indication information is 1 bit. In case that the indication information is "1", it means that the type-B terminal has the location service function, or the location service function is enabled; in case that the indication information is "0", it means that the type-B terminal does not have the location service function, or the location service function is not enabled.

In addition, the broadcast message or discovery message transmitted by the type-B terminal on the sidelink interface may further include one or more of terminal identification information, a location server identifier, supported positioning methods, and speed information of the type-B terminal. The terminal identification information may include at least one of a terminal ID and a layer-2 ID in the sidelink interface.

A type-A terminal that needs to be positioned can monitor the broadcast message or discovery message on the sidelink interface to find a type-B terminal that can provide a location service function for the type-A terminal. Then, the type-A terminal can exchange information with the type-B terminal that can provide a location service function for the type-A terminal, through the sidelink interface, to start related session and process of location, thereby completing the location.

### Implementation mode two

In order to save power, the type-B terminal may not perform periodic broadcasting. That is, when a type-A terminal cannot monitor information from a type-B terminal, the type-A terminal can actively broadcast its own positioning request.

For example, the type-A terminal can broadcast, on a sidelink interface, a request message for obtaining a location service. When the type-B terminal receives the request message, the type-B terminal can feedback that it has the location service function through the sidelink interface.

Specifically, the type-A terminal may transmit a broadcast message or a discovery message through a sidelink interface, where the broadcast message or the discovery message carries a request message that the type-A terminal needs to obtain a location service. For example, the request message is 1 bit, when the indication information is "1", it means that the type-A terminal needs to obtain the location service. Or, the type-A terminal may also broadcast a dedicated request message through the sidelink, where the dedicated request message is a newly defined message, that is, the type-A terminal can also transmit, through the newly defined message, a request message for obtaining a location service.

The broadcast message or the discovery message transmitted by the type-A terminal on the sidelink interface may further include identification information of the type-A terminal (such as at least one of the terminal ID and the layer-2 ID in the sidelink interface). Optionally, the broadcast message or the discovery message transmitted by the type-A terminal on the sidelink interface may also include one or more of the required location server identifier, supported positioning methods, and speed information.

In addition, when the type-B terminal receives the request message from the type-A terminal, the type-B terminal can transmit a message to the type-A terminal through the sidelink interface, where the message includes indication information that the type-B terminal has the location service function. For example, the indication information is 1 bit; in case that the indication information is "1", it means that the type-B terminal has the location service function, or the location service function is enabled. Optionally, the message transmitted by the type-B terminal to the type-A terminal may further include one or more of the terminal identification information, location server identification, supported positioning methods and speed information of the type-B terminal. The terminal identification information may include at least one of a terminal ID and a layer-2 ID in the sidelink interface.

In addition, after the type-A terminal receives the message returned by the type-B terminal, the type-A terminal can find the type-B terminal that can provide the location service function for the type-A terminal according to the message returned by the type-B terminal. Then, through the sidelink interface, the type-A terminal exchanges information with the type-B terminal that can provide the location service function for the type-A terminal, and starts related session and process of location, thereby completing the location.

### Implementation mode three

The type-A terminal may also obtain information of the type-B terminal in advance through a base station. For example, a base station serving the type-A terminal can periodically transmit, to the type-A terminal, terminal information of type-B terminals that are close to the type-A terminal (that is, type-B terminals whose distance to the type-A terminal is less than a preset threshold), through dedicated signaling (that is, newly defined signaling). Or, the base station periodically indicates, to the type-A terminal, terminal information of type-B terminals with a location service function, through an RRC message. The terminal information may include one or more of terminal identification information, location server identification, supported positioning methods and speed information of the type-B terminal. The terminal identification information may include a terminal ID and layer-2 id in the sidelink interface.

### Implementation mode Four

A type-A terminal transmits in advance, to a base station, a request message for obtaining location service. When the base station receives the request message, the base station indicates to the type-A terminal, through an RRC message, terminal information of type-B terminals with the location service function. The terminal information may include one or more of terminal identification information, location server identification, supported positioning methods and speed information of the type-B terminal. The terminal identification information may include at least one of a terminal ID and layer-2 id in the sidelink interface.

When the type-A terminal transmits the request message, the type-A terminal can further transmit, to the base station, at least one of terminal identification information of the type-A terminal, location server identification required by the type-A terminal, positioning methods supported by the type-A terminal or speed information of the type-A terminal. The terminal identification information may include at least one of a terminal ID and a layer-2 ID in the sidelink interface.

In addition, the principle or the type-A terminal to obtain in advance the information of the type-B terminal may include: based on service type or characteristics of the type-A terminal, or based on conditions of searched cells (for example, the number of surrounding cells is small and signal is weak), determining to request for information of the type-B terminals from the base station serving the type-A terminal in advance.

In addition, when the type-A terminal goes off-line, the type-A terminal can find type-B terminals that can provide location service for the type-A terminal, according to the information of the type-B terminals indicated by the base station that serves the type-A terminal last before the type-A terminal goes off-line. Then, through the sidelink interface, the type-A terminal exchanges information with the type-B terminal that can provide the location service function for the type-A terminal, and starts related session and process of location, thereby completing the location.

In addition, it is to be noted that no matter which of the foregoing implementation modes 1 to 4 is used by the type-A terminal to find type-B terminals that can provide the location service function for the type-A terminal,

One process in which the type-A terminal interacts with the type-B terminal to achieve positioning is described as follows:

the type-A terminal and the type-B terminal transmit LPP signaling therebetween through the sidelink interface to exchange positioning capability and negotiate configuration of a positioning signal and a positioning resource, and the type-A terminal provides positioning-related measurement results and other information to the type-B terminal for performing position calculation. After completing the position calculation, the type-B terminal feeds back a location of the type-A terminal to the type-A terminal to complete a positioning session.

That is, the type-A terminal and the type-B terminal interact with the positioning methods supported by each of the type-A terminal and the type-B terminal, so as to select a positioning method supported by both the type-A terminal and the type-B terminal. After the positioning method is determined, which one of the type-A terminal and the type-B terminal transmits a positioning signal and which terminal performs the positioning measurement can be determined, and the specific positioning resource configuration can also be determined, thereby realizing the positioning of the type-A terminal.

Optionally, the type-A terminal and the type-B terminal may exchange the above information through control signaling of a sidelink interface (SL SRB) or user plane data message of a sidelink interface (SL DRB). For example, control signaling (SL SRB) is used to interact with LPP signaling to exchange positioning capabilities, negotiate configuration of a positioning signal and a positioning resource, and user plane data message (SL DRB) is used to exchange a positioning-related measurement result, location information, etc.

It can be seen from the above that the terminal can obtain whether other terminals have the location service function through the sidelink interface, and interacts with the other terminals having the location service function through the sidelink interface, to exchange positioning capability and negotiate the positioning method and positioning resource related configuration and provide positioning measurement results, etc., thereby enabling the terminal with position calculation function (i.e., the terminal with the location service function) to perform position calculation according to the measurement results. It can be seen that, in the embodiments of the present disclosure, the positioning of the terminal can be completed through cooperation between the terminals, thereby providing auxiliary positioning for terminals when some network-assisted location services cannot meet the needs.

The positioning method provided in the embodiment of the present disclosure is described above, and the positioning device provided in the embodiment of the present disclosure is described hereinafter with reference to the accompanying drawings.

Referring to FIG. 8, one embodiment of the present disclosure further provides a positioning device, which is applied to a first terminal. The positioning device includes:
a first information obtaining module 801 configured to obtain terminal information of a second terminal with a location service function;
a location module 802 configured to interact with the second terminal through a direct communication link to obtain location information of the first terminal.

Optionally, the first information obtaining module 801 includes:
a first obtaining submodule configured to obtain the terminal information of the second terminal with the location service function through the direct communication link.

Optionally, the first obtaining submodule is specifically configured to,
receive, through a direct communication link, first indication information periodically transmitted by at least one third terminal and terminal information of the third terminal; where the first indication information is used to indicate whether the third terminal has a location service function;
according to the first indication information and the terminal information of the third terminal, select at least one terminal from the at least one third terminal, take a selected terminal as the second terminal, and taking selected terminal information as the terminal information of the second terminal.

Optionally, the first obtaining submodule is specifically configured to,
transmit, through a direct communication link, a request message for indicating need to obtain a location service, to at least one third terminal;
receive, through a direct communication link, second indication information transmitted by a candidate terminal and terminal information of the candidate terminal; where the candidate terminal is at least one of the at least one third terminal, and the second indication information is used to indicate that the candidate terminal has a location service function;
according to the second indication information and the terminal information of the candidate terminal, select at least one terminal from the at least one candidate terminal, take a selected terminal as the second terminal, and taking selected terminal information as the terminal information of the second terminal.

Optionally, the device further includes:
a first transmission module configured to transmit target information to the third terminal, where the target information includes at least one of identification information of the first terminal, identification information of a required location server, positioning methods supported by the first terminal, or speed information of the first terminal.

When the first obtaining submodule receives, through the direct communication link, the second indication information transmitted by the candidate terminal and terminal information of the candidate terminal, the first obtaining submodule is specifically configured to,
receive, through the direct communication link, the second indication information and the terminal information of the candidate terminal, transmitted by the candidate terminal according to the target information.

Optionally, the first information obtaining module 801 includes:
a second obtaining submodule configured to interact with a base station connected to the first terminal to obtain the terminal information of the second terminal with the location service function.

Optionally, the second obtaining submodule is specifically configured to,
receive terminal information of at least one fourth terminal with a positioning service function periodically transmitted by the base station;
according to the terminal information of the fourth terminal, select at least one terminal from the at least one fourth terminal, take a selected terminal as the second terminal, and taking selected terminal information as the terminal information of the second terminal.

Optionally, when the second obtaining submodule, according to the terminal information of the fourth terminal, selects at least one terminal from the at least one fourth terminal, takes a selected terminal as the second terminal and takes selected terminal information as the terminal information of the second terminal, he second obtaining submodule is specifically configured to,
when the first terminal leaves a network coverage area, select at least one terminal from the at least one fourth terminal according to the terminal information of the at least one fourth terminal transmitted by the base station last time, take a selected terminal as the second terminal, and take selected terminal information as the terminal information of the second terminal.

Optionally, the second obtaining submodule is specifically configured to,
transmit, to the base station, a request message for indicating need to obtain a location service;
receive terminal information of at least one fourth terminal with a location service function transmitted by the base station;
select at least one terminal from the at least one fourth terminal according to the terminal information of the at least one fourth terminal, take a selected terminal as the second terminal, and take selected terminal information as terminal information of the second terminal.

Optionally, the device further includes:
a second transmission module configured to transmit target information to the base station, where the target information includes at least one of identification information of the first terminal, identification information of a required location server, positioning methods supported by the first terminal, or speed information of the first terminal.

When the second obtaining submodule receives terminal information of at least one fourth terminal with a location service function transmitted by the base station, the second obtaining submodule is specifically configured to,
receive the terminal information of the at least one fourth terminal with the location service function transmitted by the base station according to the target information.

Optionally, the terminal information includes at least one of terminal identification information, location server identification information, supported positioning methods or speed information.

It is to be noted here that the foregoing positioning device applied to the first terminal provided in the embodiments of the present disclosure can implement all steps implemented by the above embodiment of the positioning method applied to the first terminal, and can achieve the same technical effect. Parts and beneficial effects in this embodiment that are the same as those in the method embodiment will not be described in detail here.

Referring to FIG. 9, one embodiment of the present disclosure further provides a positioning device, which is applied to a third terminal. The positioning device includes:
a first interaction module 901 configured to interact with a first terminal to provide the first terminal with indication information for indicating whether the third terminal has a location service function, so that the first terminal selects at least one terminal with a location service function from the third terminal as a second terminal.

Optionally, the first interaction module 901 is specifically configured to,
periodically transmit, to the first terminal, first indication information and terminal information of the third terminal, through a direct communication link, where the first indication information is used to indicate whether the third terminal has a location service function.

Optionally, the first interaction module 901 is specifically configured to,
receive, through a direct communication link, a request message transmitted by the first terminal, where the request message is used to indicate that the first terminal needs to obtain a location service;
in case that the third terminal has a location service function, transmit, to the first terminal, second indication information and terminal information of the third terminal, through the direct communication link; where the second indication information is used to indicate that the third terminal has a location service function.

Optionally, the device further includes:
a first receiving module configured to receive target information transmitted by the first terminal, where the target information includes at least one of identification information of the first terminal, identification information of a required location server, positioning methods supported by the first terminal, or speed information of the first terminal.

When the first interaction module transmits, to the first terminal, second indication information and terminal information of the third terminal, through the direct communication link, the first interaction module is specifically configured to,
according to the target information, transmit, to the first terminal, the second indication information and the terminal information of the third terminal, through the direct communication link.

Optionally, the terminal information includes at least one of terminal identification information, location server identification information, supported positioning methods or speed information.

It is to be noted here that the foregoing positioning device applied to the third terminal provided in the embodiments of the present disclosure can implement all steps implemented by the above embodiment of the positioning method applied to the third terminal, and can achieve the same technical effect. Parts and beneficial effects in this embodiment that are the same as those in the method embodiment will not be described in detail here.

Referring to FIG. 10, one embodiment of the present disclosure further provides a positioning device, which is applied to a base station. The positioning device includes:
a second interaction module 1001 configured to interact with a first terminal to indicate, to the first terminal, terminal information of at least one fourth terminal with a location service function, so that the first terminal selects at least one terminal from the fourth terminal as a second terminal.

Optionally, the second interaction module 1001 includes:
a third obtaining submodule configured to periodically transmit, to the first terminal, the terminal information of at least one fourth terminal with the location service function.

Optionally, the third obtaining submodule is specifically configured to,
receive a request message for indicating need to obtain a location service, transmitted by the first terminal;
transmit, to the first terminal, the terminal information of at least one fourth terminal with the location service function.

Optionally, the device further includes:
a second receiving module configured to receive target information transmitted by the first terminal, where the target information includes at least one of identification information of the first terminal, identification information of a required location server, positioning methods supported by the first terminal, or speed information of the first terminal.

When the third obtaining submodule transmits, to the first terminal, the terminal information of at least one fourth terminal with the location service function, the third obtaining submodule is specifically configured to,
according to the target information, transmit, to the first terminal, the terminal information of at least one fourth terminal with the location service function.

Optionally, the terminal information includes at least one of terminal identification information, location server identification information, supported positioning methods or speed information.

It is to be noted here that the foregoing positioning device applied to the base station provided in the embodiments of the present disclosure can implement all steps implemented by the above embodiment of the positioning method applied to the base station, and can achieve the same technical effect. Parts and beneficial effects in this embodiment that are the same as those in the method embodiment will not be described in detail here.

In addition, one embodiment of the present disclosure further provides a positioning system, including the above positioning device applied to the first terminal, the positioning device applied to the third terminal, and the positioning device applied to the base station.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

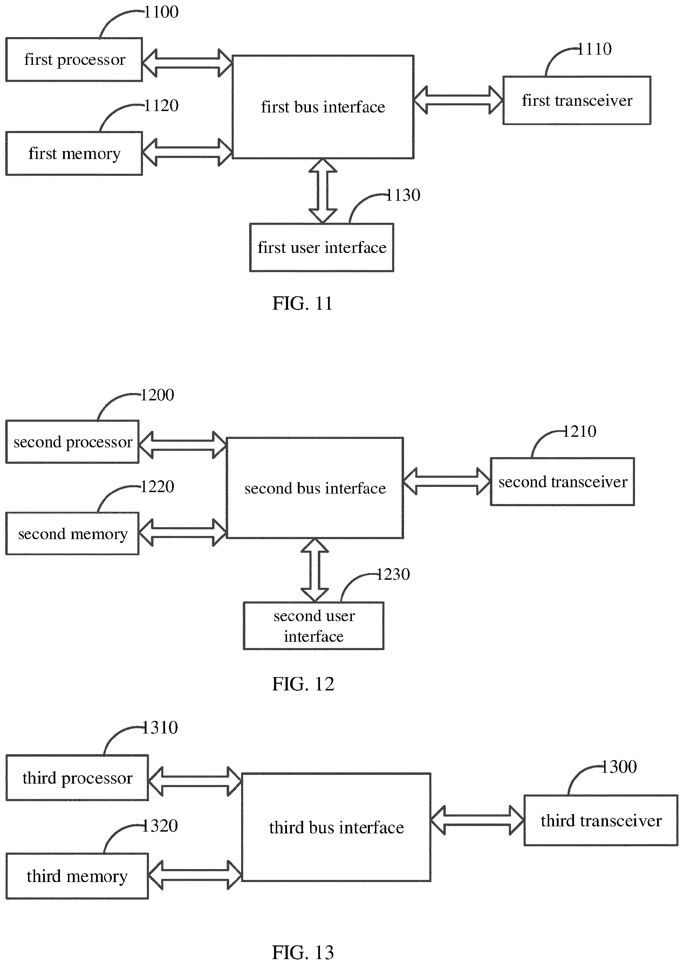

As shown in FIG. 11, one embodiment of the present disclosure further provides a positioning device, which is applied to a first terminal. The positioning device includes a first memory 1120, a first transceiver 1110, and a first processor 1100.

The first memory 1120 is configured to store a computer program.

The first transceiver 1110 is configured to transmit and receive data under the control of the first processor 1100.

The first processor 1100 is configured to read the computer program in the first memory 1120 and perform the following operations:
obtaining terminal information of a second terminal with a location service function;
interacting with the second terminal through a direct communication link to obtain location information of the first terminal.

Optionally, when the first processor 1100 obtains the terminal information of the second terminal with the location service function, the first processor 1100 is specifically configured to,
obtain the terminal information of the second terminal with the location service function through the direct communication link.

Optionally, when the first processor 1100 obtains the terminal information of the second terminal with the location service function through the direct communication link, the first processor 1100 is specifically configured to,
control the first transceiver 1110 to receive, through a direct communication link, first indication information periodically transmitted by at least one third terminal and terminal information of the third terminal; where the first indication information is used to indicate whether the third terminal has a location service function;
according to the first indication information and the terminal information of the third terminal, select at least one terminal from the at least one third terminal, take a selected terminal as the second terminal, and take selected terminal information as the terminal information of the second terminal.

Optionally, when the first processor 1100 obtains the terminal information of the second terminal with the location service function, the first processor 1100 is specifically configured to,
control the first transceiver 1110 to transmit, through a direct communication link, a request message for indicating need to obtain a location service, to at least one third terminal;
control the first transceiver 1110 to receive, through a direct communication link, second indication information transmitted by a candidate terminal and terminal information of the candidate terminal; where the candidate terminal is at least one of the at least one third terminal, and the second indication information is used to indicate that the candidate terminal has a location service function;
according to the second indication information and the terminal information of the candidate terminal, select at least one terminal from the at least one candidate terminal, take a selected terminal as the second terminal, and take selected terminal information as the terminal information of the second terminal.

Optionally, the first transceiver 1110 is further configured to, transmit target information to the third terminal, where the target information includes at least one of identification information of the first terminal, identification information of a required location server, positioning methods supported by the first terminal, or speed information of the first terminal.

When the first transceiver 1110 receives, through the direct communication link, the second indication information transmitted by the candidate terminal and the terminal information of the candidate terminal, the first transceiver 1110 is specifically configured to,
receive, through the direct communication link, the second indication information and the terminal information of the candidate terminal, transmitted by the candidate terminal according to the target information.

Optionally, when the first processor 1100 obtains the terminal information of the second terminal with the location service function, the first processor 1100 is specifically configured to,
control the first transceiver 1110 to interact with a base station connected to the first terminal to obtain the terminal information of the second terminal with the location service function.

Optionally, when the first transceiver 1110 interacts with the base station connected to the first terminal to obtain the terminal information of the second terminal with the location service function, the first transceiver 1110 is specifically configured to,
receive terminal information of at least one fourth terminal with a positioning service function periodically transmitted by the base station.

The first processor 1100 is further configured to, according to the terminal information of the fourth terminal, select at least one terminal from the at least one fourth terminal, take a selected terminal as the second terminal, and take selected terminal information as the terminal information of the second terminal.

Optionally, when the first processor 1100 selects at least one terminal from the at least one fourth terminal according to the terminal information of the fourth terminal, takes the selected terminal as the second terminal, and takes the selected terminal information as the terminal information of the second terminal, the first processor 1100 is specifically configured to,
when the first terminal leaves a network coverage area, select at least one terminal from the at least one fourth terminal according to the terminal information of the at least one fourth terminal transmitted by the base station last time, take a selected terminal as the second terminal, and take selected terminal information as the terminal information of the second terminal.

Optionally, when the first transceiver 1110 interacts with the base station connected to the first terminal to obtain terminal information of the second terminal with a location service function, the first transceiver 1110 is specifically configured to,
transmit, to the base station, a request message for indicating need to obtain a location service;
receive terminal information of at least one fourth terminal with a location service function transmitted by the base station.

The first processor 1100 is specifically configured to select at least one terminal from the at least one fourth terminal according to the terminal information of the at least one fourth terminal, take a selected terminal as the second terminal, and take selected terminal information as terminal information of the second terminal.

Optionally, the first transceiver 1110 is specifically configured to,
transmit target information to the base station, where the target information includes at least one of identification information of the first terminal, identification information of a required location server, positioning methods supported by the first terminal, or speed information of the first terminal.

When the first transceiver 1110 receives the terminal information of at least one fourth terminal with the location service function transmitted by the base station, the first transceiver 1110 is specifically configured to,
receive the terminal information of the at least one fourth terminal with the location service function transmitted by the base station according to the target information.

Optionally, the terminal information includes at least one of terminal identification information, location server identification information, supported positioning methods or speed information.

In FIG. 11, a bus architecture may include any number of interconnected bus and bridge. Specifically, various circuits of one or more processors, which are represented by the first processor 1100, and one or more memories, which are represented by the first memory 1120, are linked together. The bus architecture may link various other circuits, such as a peripheral device, voltage regulator and a power management circuit together. These features are well known in this field; therefore, this disclosure does not make further description on these features. The bus interface provides an interface. The first transceiver 1110 may be multiple elements, including a transmitter and a receiver and provide units, which communicate with other devices on the transmission medium. The transmission medium includes wireless channels, wired channels, and optical cables. For different terminals, a first user interface 1130 may also be an interface capable of externally connecting required devices, and the connected devices include but are not limited to keypads, displays, speakers, microphones, joysticks, etc.

The first processor 1100 is responsible for managing the bus architecture and the normal processing. The first memory 1120 may be used to store data used by the processor 1100 for performing operations.

Optionally, the first processor 1100 may be a central processing unit (CPU), an application specific integrated circuit (ASIC), a field-programmable gate array (FPGA) or a complex programmable logic device (CPLD). The processor may also adopt multi-core architecture.

The processor is used to call the computer program stored in the memory, and execute any method provided in the embodiments of the present disclosure according to obtained executable instructions. The processor and the memory may also be physically separated.

As shown in FIG. 12, one embodiment of the present disclosure further provides a positioning device, which is applied to a third terminal. The positioning device includes a second memory 1220, a second transceiver 1210 and a second processor 1200.

The second memory 1220 is configured to store a computer program.

The second transceiver 1210 is configured to transmit and receive data under the control of the second processor 1200.

The second processor 1200 is configured to read the computer program in the second memory 1220 and perform the following operations:
controlling the second transceiver 1210 to interact with a first terminal to provide the first terminal with indication information for indicating whether the third terminal has a location service function, so that the first terminal selects at least one terminal with a location service function from the third terminal as a second terminal.

Optionally, when the second transceiver 1210 interacts with the first terminal to provide the first terminal with the indication information for indicating whether the third terminal has the location service function, the second transceiver 1210 is specifically configured to,
periodically transmit, to the first terminal, first indication information and terminal information of the third terminal, through a direct communication link, where the first indication information is used to indicate whether the third terminal has a location service function.

Optionally, when the second transceiver 1210 interacts with the first terminal to provide the first terminal with the indication information for indicating whether the third terminal has the location service function, the second transceiver 1210 is specifically configured to,
receive, through a direct communication link, a request message transmitted by the first terminal, where the request message is used to indicate that the first terminal needs to obtain a location service;
in case that the third terminal has a location service function, transmit, to the first terminal, second indication information and terminal information of the third terminal, through the direct communication link; where the second indication information is used to indicate that the third terminal has a location service function.

Optionally, the second transceiver 1210 is further configured to,
receive target information transmitted by the first terminal, where the target information includes at least one of identification information of the first terminal, identification information of a required location server, positioning methods supported by the first terminal, or speed information of the first terminal.

Optionally, when the second transceiver 1210 transmits, to the first terminal, the second indication information and the terminal information of the third terminal, through the direct communication link, the second transceiver 1210 is specifically configured to,
according to the target information, transmit, to the first terminal, the second indication information and the terminal information of the third terminal, through the direct communication link.

Optionally, the terminal information includes at least one of terminal identification information, location server identification information, supported positioning methods or speed information.

In FIG. 12, a bus architecture may include any number of interconnected bus and bridge. Specifically, various circuits of one or more processors, which are represented by the second processor 1200, and one or more memories, which are represented by the second memory 1220, are linked together. The bus architecture may link various other circuits, such as a peripheral device, voltage regulator and a power management circuit together. These features are well known in this field; therefore, this disclosure does not make further description on these features. The bus interface provides an interface. The second transceiver 1210 may be multiple elements, including a transmitter and a receiver and provide units, which communicate with other devices on the transmission medium. The transmission medium includes wireless channels, wired channels, and optical cables. For different terminals, a second user interface 1230 may also be an interface capable of externally connecting required devices, and the connected devices include but are not limited to keypads, displays, speakers, microphones, joysticks, etc.

The second processor 1200 is responsible for managing the bus architecture and the normal processing. The second memory 1220 may be used to store data used by the processor 1200 for performing operations.

Optionally, the second processor 1200 may be a central processing unit (CPU), an application specific integrated circuit (ASIC), a field-programmable gate array (FPGA) or a complex programmable logic device (CPLD). The second processor 1200 may also adopt multi-core architecture.

The second processor 1200 is used to call the computer program stored in the second memory 1220, and execute any method provided in the embodiments of the present disclosure according to obtained executable instructions. The second processor 1200 and the second memory 1220 may also be physically separated.

As shown in FIG. 13, one embodiment of the present disclosure further provides a positioning device, which is applied to a base station. The device includes a third memory 1320, a third transceiver 1300 and a third processor 1310.

The third memory 1320 is configured to store a computer program.

The third transceiver 1300 is configured to transmit and receive data under the control of the third processor 1310.

The third processor 1310 is configured to read the computer program in the third memory 1320 and perform the following operations:
controlling the third transceiver 1300 to interact with a first terminal to indicate, to the first terminal, terminal information of at least one fourth terminal with a location service function, so that the first terminal selects at least one terminal from the fourth terminal as a second terminal.

Optionally, when the third transceiver 1300 interacts with the first terminal to indicate, to the first terminal, terminal information of at least one fourth terminal with the location service function, the third transceiver 1300 is specifically configured to periodically transmit, to the first terminal, the terminal information of at least one fourth terminal with the location service function.

Optionally, when the third transceiver 1300 interacts with the first terminal to indicate, to the first terminal, terminal information of at least one fourth terminal with the location service function, the third transceiver 1300 is specifically configured to,
receive a request message for indicating need to obtain a location service, transmitted by the first terminal;
transmit, to the first terminal, the terminal information of at least one fourth terminal with the location service function.

Optionally, the third transceiver 1300 is further configured to,
receive target information transmitted by the first terminal, where the target information includes at least one of identification information of the first terminal, identification information of a required location server, positioning methods supported by the first terminal, or speed information of the first terminal.

When the third transceiver 1300 transmits, to the first terminal, the terminal information of at least one fourth terminal with the location service function, the third transceiver 1300 is specifically configured to, according to the target information, transmit, to the first terminal, the terminal information of at least one fourth terminal with the location service function.

Optionally, the terminal information includes at least one of terminal identification information, location server identification information, supported positioning methods or speed information.

In FIG. 13, a bus architecture may include any number of interconnected bus and bridge. Specifically, various circuits of one or more processors, which are represented by the third processor 1310, and one or more memories, which are represented by the third memory 1320, are linked together. The bus architecture may link various other circuits, such as a peripheral device, voltage regulator and a power management circuit together. These features are well known in this field; therefore, this disclosure does not make further description on these features. The bus interface provides an interface. The third transceiver 1300 may be multiple elements, including a transmitter and a receiver and provide units, which communicate with other devices on the transmission medium. The transmission medium includes wireless channels, wired channels, and optical cables. The third processor 1310 is responsible for managing the bus architecture and the normal processing. The third memory 1320 may be used to store data used by the third processor 1310 for performing operations.

The third processor 1310 may be a central processing unit (CPU), an application specific integrated circuit (ASIC), a field-programmable gate array (FPGA) or a complex programmable logic device (CPLD). The third processor 1310 may also adopt multi-core architecture.

It is to be noted here that the foregoing device provided in the embodiments of the present disclosure can implement all steps implemented by the above method embodiment, and can achieve the same technical effect. Parts and beneficial effects in this embodiment that are the same as those in the method embodiment will not be described in detail here.

One embodiment of the present disclosure further provides a processor-readable storage medium, which includes a computer program stored thereon. The computer program is used to cause a processor to execute the positioning method.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, nonvolatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The device embodiments described above are only an example. The units described as separate components may or may not be physically separated, and components shown as units may or may not be physical units, that is, they may be located in one place, or may be distributed to multiple network units. Part or all of the units may be selected according to actual needs to achieve the purpose of the solutions of the embodiments of the present disclosure. It can be understood and implemented by those skilled in the art without any creative efforts.

The various embodiments of the present disclosure may be implemented by hardware, or by software modules running on one or more processors, or in a combination thereof. Those skilled in the art should understand that a microprocessor or a digital signal processor (DSP) may be used in practice to implement some or all functions of some or all components in a computing processing device according to the embodiments of the present disclosure. The present disclosure may also be implemented as a device or apparatus program (such as computer program and computer program product) for performing a part or all of the methods described herein. Such a program realizing the present disclosure may be stored on a computer-readable medium, or may have the form of one or more signals. Such a signal may be downloaded from an internet site, or provided on a carrier signal, or provided in any other form.

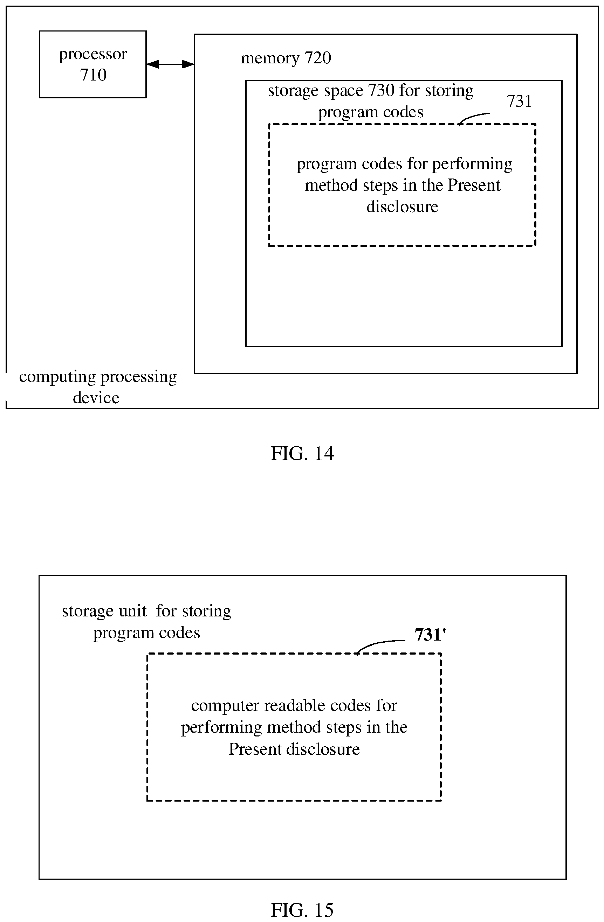

For example, FIG. 14 shows a computing processing device that can implement methods according to the present disclosure. The computing processing device generally includes a processor 1410 and a computer program product or computer-readable medium in the form of memory 1420. The memory 1420 may be an electronic memory such as flash memory, EEPROM, EPROM, hard disk, or ROM. The memory 1420 has a storage space 1430 for storing program codes 1431 for performing any method steps in the methods described above. For example, the storage space 1430 for storing program codes may include respective program codes 1431 for respectively implementing various steps in the above methods. These program codes may be read from or written into one or more computer program products. These computer program products include program code carriers such as hard disks, compact disks (CDs), memory cards or floppy disks. Such a computer program product is typically a portable or fixed storage unit as shown in FIG. 15. The storage unit may have storage segments, storage spaces, etc. arranged similarly to the memory 1420 in the computing processing device of FIG. 14. The program code can, for example, be compressed in a suitable form. Typically, the storage unit includes computer readable codes 1431', i.e., codes readable by, for example, a processor such as the processor 1410. Theses codes, when executed by the computing processing device, cause the computing processing device to perform the steps of the methods described above.

"One embodiment", "an embodiment", or "one or more embodiments" involved in the present disclosure means that a particular feature, structure, or characteristic described in conjunction with an embodiment is included in at least one embodiment of the present disclosure. Additionally, it is to be noted that examples of the terms "in one embodiment" herein do not necessarily all refer to the same embodiment.

In the description provided herein, numerous specific details are provided. However, it is to be understood that embodiments of the present disclosure may be practiced without these specific details. In some instances, well-known methods, structures and techniques have not been shown in detail, in order not to obscure the understanding of this description.

In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present disclosure may be implemented by means of hardware including several distinct elements, and by means of a suitably programmed computer. In a unit claim enumerating several devices, several of these devices may be embodied by one hardware. The use of the words such as first, second, and third, does not indicate any order. These words may be interpreted as names.

It is obvious that those skilled in the art may make various changes and modifications to the present disclosure without departing from the spirit and scope of the present disclosure. Thus, if these modifications and variations of the present disclosure fall within the scope of the claims of the present disclosure and equivalent technologies thereof, the present
disclosure also intends to include these modifications and variations.

## Claims

1. A positioning method, performed by a first terminal, comprising:
obtaining terminal information of a second terminal with a location service function; and
interacting with the second terminal through a direct communication link to obtain location information of the first terminal.

2. The method according to claim 1, wherein the obtaining terminal information of a second terminal with a location service function, includes:
obtaining the terminal information of the second terminal with the location service function through the direct communication link.

3. The method according to claim 2, wherein the obtaining the terminal information of the second terminal with the location service function through the direct communication link, includes:
receiving, through a direct communication link, first indication information periodically transmitted by at least one third terminal and terminal information of the at least one third terminal; wherein the first indication information is used to indicate whether the at least one third terminal has a location service function;
according to the first indication information and the terminal information of the at least one third terminal, selecting at least one terminal from the at least one third terminal, taking a selected terminal as the second terminal, and taking selected terminal information as the terminal information of the second terminal.

4. The method according to claim 2, wherein the obtaining the terminal information of the second terminal with the location service function through the direct communication link, includes:
transmitting, through a direct communication link, a request message for indicating need to obtain a location service, to at least one third terminal;
receiving, through a direct communication link, second indication information transmitted by a candidate terminal and terminal information of the candidate terminal; wherein the candidate terminal is at least one of the at least one third terminal, and the second indication information is used to indicate that the candidate terminal has a location service function;
according to the second indication information and the terminal information of the candidate terminal, selecting at least one terminal from the at least one candidate terminal, taking a selected terminal as the second terminal, and taking selected terminal information as the terminal information of the second terminal.

5. The method according to claim 4, wherein before receiving, through a direct communication link, second indication information transmitted by a candidate terminal and terminal information of the candidate terminal, the method further includes:
transmitting target information to the third terminal, wherein the target information includes at least one of identification information of the first terminal, identification information of a required location server, positioning methods supported by the first terminal, or speed information of the first terminal;
the receiving, through a direct communication link, second indication information transmitted by a candidate terminal and terminal information of the candidate terminal, includes:
receiving, through the direct communication link, the second indication information and the terminal information of the candidate terminal, transmitted by the candidate terminal according to the target information.

6. The method according to claim 1, wherein the obtaining terminal information of a second terminal with a location service function, includes:
interacting with a base station connected to the first terminal to obtain the terminal information of the second terminal with the location service function.

7. The method according to claim 6, wherein the interacting with a base station connected to the first terminal to obtain the terminal information of the second terminal with the location service function, includes:
receiving terminal information of at least one fourth terminal with a positioning service function periodically transmitted by the base station;
selecting at least one terminal from the at least one fourth terminal according to the terminal information of the fourth terminal, taking a selected terminal as the second terminal, and taking selected terminal information as the terminal information of the second terminal.

8. The method according to claim 7, wherein the selecting at least one terminal from the at least one fourth terminal according to the terminal information of the fourth terminal, taking a selected terminal as the second terminal, and taking selected terminal information as the terminal information of the second terminal, includes:
when the first terminal leaves a network coverage area, selecting at least one terminal from the at least one fourth terminal according to the terminal information of the at least one fourth terminal transmitted by the base station last time, taking a selected terminal as the second terminal, and taking selected terminal information as the terminal information of the second terminal.

9. The method according to claim 6, wherein the interacting with a base station connected to the first terminal to obtain the terminal information of the second terminal with the location service function, includes:
transmitting, to the base station, a request message for indicating need to obtain a location service;
receiving terminal information of at least one fourth terminal with a location service function transmitted by the base station;
selecting at least one terminal from the at least one fourth terminal according to the terminal information of the at least one fourth terminal, taking a selected terminal as the second terminal, and taking selected terminal information as terminal information of the second terminal.

10. The method according to claim 9, wherein before receiving terminal information of at least one fourth terminal with a location service function transmitted by the base station, the method further includes:
transmitting target information to the base station, wherein the target information includes at least one of identification information of the first terminal, identification information of a required location server, positioning methods supported by the first terminal, or speed information of the first terminal;
the receiving terminal information of at least one fourth terminal with a location service function transmitted by the base station, includes:
receiving the terminal information of the at least one fourth terminal with the location service function transmitted by the base station according to the target information.

11. The method according to any one of claims 1 to 10, wherein the terminal information includes at least one of terminal identification information, location server identification information, supported positioning methods or speed information.

12. A positioning method, performed by a third terminal, comprising:
interacting with a first terminal to provide the first terminal with indication information for indicating whether the third terminal has a location service function, thereby enabling the first terminal to select at least one terminal with a location service function from the third terminal as a second terminal.

13. The method according to claim 12, wherein the interacting with a first terminal to provide the first terminal with indication information for indicating whether the third terminal has a location service function, includes:
periodically transmitting, to the first terminal, first indication information and terminal information of the third terminal, through a direct communication link, wherein the first indication information is used to indicate whether the third terminal has a location service function.

14. The method according to claim 12, wherein the interacting with a first terminal to provide the first terminal with indication information for indicating whether the third terminal has a location service function, includes:
receiving, through a direct communication link, a request message transmitted by the first terminal, wherein the request message is used to indicate that the first terminal needs to obtain a location service;
in case that the third terminal has a location service function, transmitting, to the first terminal, second indication information and terminal information of the third terminal, through the direct communication link; wherein the second indication information is used to indicate that the third terminal has a location service function.

15. The method according to claim 14, wherein before transmitting, to the first terminal, second indication information and terminal information of the third terminal, through the direct communication link, the method further includes:
receiving target information transmitted by the first terminal, wherein the target information includes at least one of identification information of the first terminal, identification information of a required location server, positioning methods supported by the first terminal, or speed information of the first terminal;
the transmitting, to the first terminal, second indication information and terminal information of the third terminal, through the direct communication link, includes:
according to the target information, transmitting, to the first terminal, the second indication information and the terminal information of the third terminal, through the direct communication link.

16. The method according to claim 13 or 14, wherein the terminal information includes at least one of terminal identification information, location server identification information, supported positioning methods or speed information.

17. A positioning method, performed by a base station, comprising:
interacting with a first terminal to indicate, to the first terminal, terminal information of at least one fourth terminal with a location service function, thereby enabling the first terminal to select at least one terminal from the fourth terminal as a second terminal.

18. The method according to claim 17, wherein the interacting with a first terminal to indicate, to the first terminal, terminal information of at least one fourth terminal with a location service function, includes:
periodically transmitting, to the first terminal, the terminal information of at least one fourth terminal with the location service function.

19. The method according to claim 17, wherein the interacting with a first terminal to indicate, to the first terminal, terminal information of at least one fourth terminal with a location service function, includes:
receiving a request message for indicating need to obtain a location service, transmitted by the first terminal;
transmitting, to the first terminal, the terminal information of at least one fourth terminal with the location service function.

20. The method according to claim 19, wherein before transmitting, to the first terminal, the terminal information of at least one fourth terminal with the location service function, the method further includes:
receiving target information transmitted by the first terminal, wherein the target information includes at least one of identification information of the first terminal, identification information of a required location server, positioning methods supported by the first terminal, or speed information of the first terminal;
the transmitting, to the first terminal, the terminal information of at least one fourth terminal with the location service function, includes:
according to the target information, transmitting, to the first terminal, the terminal information of at least one fourth terminal with the location service function.

21. The method according to claim 18 or 19, wherein the terminal information includes at least one of terminal identification information, location server identification information, supported positioning methods or speed information.

22. A positioning device applied to a first terminal, comprising: a first memory, a first transceiver and a first processor;
wherein the first memory is configured to store a computer program;
the first transceiver is configured to transmit and receive data under the control of the first processor;
the first processor is configured to read the computer program in the first memory and perform the following operations:
obtaining terminal information of a second terminal with a location service function;
interacting with the second terminal through a direct communication link to obtain location information of the first terminal.

23. The device according to claim 22, wherein when the first processor obtains the terminal information of the second terminal with the location service function, the first processor is configured to,
obtain the terminal information of the second terminal with the location service function through the direct communication link.

24. The device according to claim 23, wherein when the first processor obtains the terminal information of the second terminal with the location service function through the direct communication link, the first processor is configured to,
control the first transceiver to receive, through a direct communication link, first indication information periodically transmitted by at least one third terminal and terminal information of the at least one third terminal; wherein the first indication information is used to indicate whether the at least one third terminal has a location service function;
according to the first indication information and the terminal information of the at least one third terminal, select at least one terminal from the at least one third terminal, take a selected terminal as the second terminal, and take selected terminal information as the terminal information of the second terminal.

25. The device according to claim 23, wherein when the first processor obtains the terminal information of the second terminal with the location service function through the direct communication link, the first processor is configured to,
control the first transceiver to transmit, through a direct communication link, a request message for indicating need to obtain a location service, to at least one third terminal;
control the first transceiver to receive, through a direct communication link, second indication information transmitted by at least one candidate terminal and terminal information of the at least one candidate terminal; wherein the at least one candidate terminal is at least one of the at least one third terminal, and the second indication information is used to indicate that the at least one candidate terminal has a location service function;
according to the second indication information and the terminal information of the candidate terminal, select at least one terminal from the at least one candidate terminal, take a selected terminal as the second terminal, and take selected terminal information as the terminal information of the second terminal.

26. The device according to claim 22, wherein when the first processor obtains the terminal information of the second terminal with the location service function, the first processor is specifically configured to,
control the first transceiver to interact with a base station connected to the first terminal to obtain the terminal information of the second terminal with the location service function.

27. The device according to claim 26, wherein when the first transceiver interacts with the base station connected to the first terminal to obtain the terminal information of the second terminal with the location service function, the first transceiver is specifically configured to receive terminal information of at least one fourth terminal with a positioning service function periodically transmitted by the base station;
the first processor is further configured to, according to the terminal information of the fourth terminal, select at least one terminal from the at least one fourth terminal, take a selected terminal as the second terminal, and take selected terminal information as the terminal information of the second terminal.

28. The device according to claim 27, wherein when the first processor selects at least one terminal from the at least one fourth terminal according to the terminal information of the fourth terminal, takes the selected terminal as the second terminal, and takes the selected terminal information as the terminal information of the second terminal, the first processor is specifically configured to,
when the first terminal leaves a network coverage area, select at least one terminal from the at least one fourth terminal according to the terminal information of the at least one fourth terminal transmitted by the base station last time, take a selected terminal as the second terminal, and take selected terminal information as the terminal information of the second terminal.

29. The device according to claim 26, wherein when the first transceiver interacts with the base station connected to the first terminal to obtain terminal information of the second terminal with a location service function, the first transceiver is specifically configured to,
transmit, to the base station, a request message for indicating need to obtain a location service;
receive terminal information of at least one fourth terminal with a location service function transmitted by the base station;
the first processor is further configured to select at least one terminal from the at least one fourth terminal according to the terminal information of the at least one fourth terminal, take a selected terminal as the second terminal, and take selected terminal information as terminal information of the second terminal.

30. A positioning device applied to a third terminal, comprising: a second memory, a second transceiver and a second processor;
wherein the second memory is configured to store a computer program;
the second transceiver is configured to transmit and receive data under the control of the second processor;
the second processor is configured to read the computer program in the second memory and perform the following operations:
controlling the second transceiver to interact with a first terminal to provide the first terminal with indication information for indicating whether the third terminal has a location service function, thereby enabling the first terminal to select at least one terminal with a location service function from the third terminal as a second terminal.

31. The device according to claim 30, wherein when the second transceiver interacts with the first terminal to provide the first terminal with the indication information for indicating whether the third terminal has the location service function, the second transceiver is specifically configured to,
periodically transmit, to the first terminal, first indication information and terminal information of the third terminal, through a direct communication link, wherein the first indication information is used to indicate whether the third terminal has a location service function.

32. The device according to claim 30, wherein when the second transceiver interacts with the first terminal to provide the first terminal with the indication information for indicating whether the third terminal has the location service function, the second transceiver is specifically configured to,
receive, through a direct communication link, a request message transmitted by the first terminal, wherein the request message is used to indicate that the first terminal needs to obtain a location service;
in case that the third terminal has a location service function, transmit, to the first terminal, second indication information and terminal information of the third terminal, through the direct communication link; wherein the second indication information is used to indicate that the third terminal has a location service function.

33. A positioning device applied to a base station, comprising: a third memory, a third transceiver and a third processor;
wherein the third memory is configured to store a computer program;
the third transceiver is configured to transmit and receive data under the control of the third processor;
the third processor is configured to read the computer program in the third memory and perform the following operations:
controlling the third transceiver to interact with a first terminal to indicate, to the first terminal, terminal information of at least one fourth terminal with a location service function, thereby enabling the first terminal to select at least one terminal from the fourth terminal as a second terminal.

34. The device according to claim 33, wherein when the third transceiver interacts with the first terminal to indicate, to the first terminal, terminal information of at least one fourth terminal with the location service function, the third transceiver is specifically configured to periodically transmit, to the first terminal, the terminal information of at least one fourth terminal with the location service function.

35. The device according to claim 33, wherein when the third transceiver interacts with the first terminal to indicate, to the first terminal, terminal information of at least one fourth terminal with the location service function, the third transceiver is specifically configured to,
receive a request message for indicating need to obtain a location service, transmitted by the first terminal;
transmit, to the first terminal, the terminal information of at least one fourth terminal with the location service function.

36. A positioning device applied to a first terminal, comprising:
a first information obtaining module configured to obtain terminal information of a second terminal with a location service function;
a location module configured to interact with the second terminal through a direct communication link to obtain location information of the first terminal.

37. A positioning device applied to a third terminal, comprising:
a first interaction module configured to interact with a first terminal to provide the first terminal with indication information for indicating whether the third terminal has a location service function, thereby enabling the first terminal to select at least one terminal with a location service function from the third terminal as a second terminal.

38. A positioning device applied to a base station, comprising:
a second interaction module configured to interact with a first terminal to indicate, to the first terminal, terminal information of at least one fourth terminal with a location service function, thereby enabling the first terminal to select at least one terminal from the fourth terminal as a second terminal.

39. A processor-readable storage medium, comprising a computer program stored thereon; wherein the computer program is used to enable a processor to execute the method according to any one of claims 1 to 11, or to execute the method according to any one of claims 12 to 16, or to execute the method according to any one of claims 17 to 21.

40. A computer program, comprising computer readable codes; wherein the computer readable codes, when running on a computing processing device, cause the computing processing device to execute the method according to any one of claims 1 to 11, or to execute the method according to any one of claims 12 to 16, or to execute the method according to any one of claims 17 to 21.
